Europäisches Patentamt

European Patent Office

Office européen des brevets

(19)

(11) Numéro de publication: **0 023 368**

**A1**

(12) **DEMANDE DE BREVET EUROPEEN**

(21) Numéro de dépôt: **80200571.0**

(22) Date de dépôt: **17.06.80**

(51) Int. Cl.³: **C 25 B 11/06**

(30) Priorité: **29.06.79 FR 7917441**

(43) Date de publication de la demande:
**04.02.81 Bulletin 81/5**

(84) Etats Contractants Désignés:
**AT BE CH DE FR GB IT LI LU NL SE**

(71) Demandeur: **SOLVAY & Cie (Société Anonyme)**
**Rue du Prince Albert, 33**
**B-1050 Bruxelles(BE)**

(72) Inventeur: **Nicolas, Edgard**
**Potaardestraat, 23**
**B-1860 Meise Eversem(BE)**

(74) Mandataire: **Eischen, Roland**
**Solvay & Cie Département de la Propriété Industrielle**
**Rue de Ransbeek 310**
**B-1120 Bruxelles(BE)**

(54) **Cathode pour la production électrolytique d'hydrogène.**

(57) L'invention a pour objet une cathode pour la production électrolytique d'hydrogène.

La cathode comprend une surface active constituée d'un oxyde métallique obtenu par décomposition thermique d'un composé thermodécomposable d'un métal choisi parmi le cobalt, le fer, le manganèse ou le nickel.

La cathode convient notamment pour l'électrolyse de solutions aqueuses du chlorure de sodium dans des cellules à diaphragme perméable.

EP 0 023 368 A1

- 1 -

## Cathode pour la production électrolytique d'hydrogène

Cas S.79/12

SOLVAY & Cie (Société Anonyme)

La présente invention a pour objet une cathode pour la production électrolytique d'hydrogène.

Dans les procédés d'électrolyse, on cherche généralement à réduire jusqu'à une valeur aussi faible que possible les potentiels des réactions électrochimiques aux électrodes. C'est particulièrement le cas dans les procédés d'électrolyse, dans lesquels on produit de l'hydrogène gazeux à la cathode, tels que les procédés d'électrolyse de l'eau, des solutions aqueuses d'acide chlorhydrique et des solutions aqueuses de chlorure de sodium ou de potassium.

Les cathodes les plus couramment utilisées jusqu'à présent pour l'électrolyse de l'eau ou des solutions aqueuses de chlorure de sodium ou de potassium ont généralement consisté en plaques ou treillis d'acier doux. Ces cathodes connues présentent en effet l'avantage d'une mise en oeuvre aisée et d'un faible coût.

La surtension au dégagement d'hydrogène sur ces cathodes connues en acier est toutefois relativement élevée, ce qui grève de manière défavorable le coût des procédés d'électrolyse.

Pour remédier à ce désavantage des cathodes connues en acier, on propose, dans la demande de brevet allemand 2620589 déposée le 10 mai 1976 au nom de Hodogaya Chemical Co Ltd, des cathodes constituées d'un support en un métal choisi parmi le titane, le tantale, le zirconium, le niobium et leurs alliages, et d'un revêtement actif choisi parmi les oxydes de ruthénium, de rhodium, de palladium, d'osmium, d'iridium et de platine. Le revêtement actif, dont la fonction est de réduire la surtension au dégagement d'hydrogène, peut être obtenu par application, sur le support de la cathode, d'une solution d'un sel de ruthénium, de rhodium, de palladium, d'osmium ou d'iridium, et chauffage subséquent de la solution pour convertir le sel en oxyde. En variante, le revêtement actif de cette cathode connue peut lui-même être revêtu d'une couche d'oxyde de métal choisi parmi ceuxdes groupes II et VI du tableau périodique des éléments, dont la fonction essentielle est d'inhiber une réduction d'ions hypochlorites lorsque la cathode sert à l'électrolyse de solutions de chlorures de métaux alcalins.

Dans le brevet Etats-Unis 4 100 049 publié le 11 juillet 1978 et cédé à Diamond Shamrock Corp., on propose des cathodes pour cellules d'électrolyse, qui comprennent un support métallique et, sur celui-ci, un revêtement actif formé d'un mélange d'oxyde de palladium et d'oxyde de zirconium. En variante, pour réduire le coût de la cathode, on suggère d'y remplacer 50 % du poids d'oxyde de palladium par de l'oxyde de cobalt ou de nickel.

Bien qu'améliorant dans une certaine mesure la surtension au dégagement d'hydrogène, ces cathodes connues présentent le désavantage d'un coût élevé, dû à la présence nécessaire de métal noble dans leur constitution.

Dans la demande de brevet allemand 2811472 déposée le 16 mars 1978 au nom de Tokuyama Soda K.K., on propose par ailleurs des cathodes pour la production électrolytique d'hydrogène, qui comprennent, sur un support en fer, en nickel ou en un alliage de ces métaux, un revêtement actif constitué d'un métal du groupe VIII du tableau périodique des éléments, obtenu par dépôt électrolytique ou par décomposition thermique, en atmosphère inerte ou réductrice, d'un composé thermodécomposable dudit métal.

Ces cathodes connues présentent le désavantage d'une fabrication difficile et coûteuse, particulièrement dans le cas où le revêtement actif est obtenu par voie thermique. En effet, la décomposition thermique du composé thermodécomposable requiert des températures excessivement élevées, généralement supérieures à 800°C, pour libérer le métal actif à l'état métallique. Il en résulte une dépense importante d'énergie et le risque d'une déformation de la cathode sous l'effet de contraintes thermiques.

L'invention a pour but de remédier aux inconvénients précités des cathodes connues, en fournissant à cet effet une cathode qui est exempte de métal noble, dont la fabrication est aisée et d'un coût modéré, et qui présente néanmoins une faible surtension au dégagement d'hydrogène.

L'invention concerne dès lors une cathode pour la production électrolytique d'hydrogène comprenant une zone active contenant un oxyde métallique obtenu par décomposition thermique d'un composé thermodécomposable; selon l'invention, la zone active est constituée essentiellement d'un oxyde métallique obtenu par décomposition thermique d'un composé thermodécomposable d'un métal choisi parmi le cobalt, le fer, le manganèse et le nickel.

Par définition, on entend désigner, par oxyde métallique de la zone active de la cathode, à la fois un oxyde monométallique de cobalt, de fer, de manganèse ou de nickel, un mélange d'oxydes de ces métaux, une solution solide d'oxydes de ces métaux ou un composé défini oxydé. Des exemples de composés définis entrant dans le cadre de l'invention sont les composés ayant la structure des spinelles, de formule générale $M^{II}M_2^{III}O_4$ où $M^{II}$ désigne le fer, et/ou le cobalt et/ou le manganèse et/ou le nickel, à la valence deux et où $M^{III}$ désigne un ou plusieurs de ces métaux à la valence trois (Structural Inorganic Chemistry - A.F.Wells - Oxford University Press - 1962 - pages 487 à 490; Crystal Structures of Minerals - Bragg & Claringbull - Bell and Sons Ltd - 1965 -pages 102 à 106). La magnétite, de formule générale $Fe_3O_4(Fe^{II}Fe_2^{III}O_4)$ conduit à des résultats particulièrement intéressants.

Selon une forme de réalisation préférée de l'invention, l'oxyde métallique de la zone active de la cathode consiste en hématite qui est de l'oxyde de fer trivalent de formule générale $Fe_2O_3$. Cette forme de réalisation de l'invention convient particulièrement bien lorsque la cathode est utilisée en présence de solutions aqueuses d'hydroxyde de métal alcalin telles que les lessives caustiques et les saumures caustiques obtenues par électrolyse de saumures de chlorure de sodium, respectivement en cellules d'électrolyse à membrane à perméabilité sélective et en cellules d'électrolyse à diaphragme perméable.

On entend par membrane à perméabilité sélective, un séparateur mince, non poreux, séparant les anodes des cathodes et comprenant une matière échangeuse d'ions. Des exemples de membranes à perméabilité sélective, convenant pour des cellules d'électrolyse de saumure, comprennent des membranes cationiques contenant des groupes $SO_3^-$ et résultant de la copolymérisation du tétrafluoréthylène et de perfluorvinyléther sulfoné, telles que les membranes connues sous le nom NAFION et vendues par E.I. du Pont de Nemours & Co.

On entend par diaphragme, une cloison perméable à l'électrolyte, en un matériau inerte, séparant les anodes des cathodes. Des exemples de diaphragmes connus comprennent des diaphragmes en amiante, tels que ceux décrits dans les brevets Etats-Unis 1 855 497, du 7 mai 1928, de Stuart et belge 773 918 du 14 octobre 1971, au nom de la Demanderesse, des feuilles poreuses formées d'un mélange d'amiante et d'un polyélectrolyte telles que celles décrites et revendiquées dans le brevet luxembourgeois 74 835 du 26 avril 1976, au nom de la Demanderesse et des feuilles poreuses en polytétrafluoréthylène, telles que celles décrites dans les brevets belges 794 889 du 2 février 1973, 817 675, 817 676 et 817 677 du 15 juillet 1974, au nom de Imperial Chemical Industries Limited.

Dans la cathode selon l'invention, les composés thermodécomposables peuvent être tous composés qui, par chauffage en atmosphère contrôlée, libèrent un oxyde de fer, de cobalt, de manganèse ou de nickel ou un mélange, une solution solide ou un composé défini d'au moins deux de ces oxydes. Ils peuvent être, par exemple, des nitrates, des sulfates, des phosphates, des sels d'acides carboxyliques tels que des formiates, des acétates, des propionates, des oxalates, etc...

Les composés thermodécomposables peuvent être utilisés à l'état solide, par exemple à l'état de poudres, ou à l'état liquide, par exemple sous la forme de sels fondus, de suspensions ou de solutions.

Le traitement thermique consiste, par définition, en un chauffage du composé thermodécomposable, à une température suffisante et en atmosphère contrôlée pour provoquer la décomposition de ce composé et la cristallisation de l'oxyde métallique de la zone active de la cathode.

La température du traitement thermique dépend de divers paramètres, parmi lesquels figurent la nature de l'oxyde métallique recherché, la nature du composé thermodécomposable, son état (solide ou liquide), la nature et la pression de l'atmosphère de travail. Des températures qui conviennent généralement bien sont celles comprises entre 50 et 700°C, de préférence celles inférieures à 400°C. Les températures comprises entre 100 et 300°C se sont avérées particulièrement adéquates.

Bien que dans certaines conditions particulières (notamment lorsque le composé thermodécomposable choisi est un nitrate ou un oxalate), on puisse exécuter la décomposition thermique en atmosphère inerte (par exemple en atmosphère d'azote ou d'argon), on préfère généralement, selon l'invention, exécuter la décomposition thermique en atmosphère oxydante, par exemple en présence d'air.

En variante, la zone active de la cathode selon l'invention peut contenir, en plus de l'oxyde métallique de cobalt, de fer, de manganèse et/ou de nickel tel que défini plus haut, des substances étrangères à l'état de traces, pour autant que celles-ci n'affectent pas les propriétés de l'oxyde métallique vis-à-vis de la surtension de dégagement de l'hydrogène.

Dans la cathode selon l'invention, l'oxyde métallique de la zone active peut former l'intégralité de la cathode.

Selon une forme de réalisation préférée de l'invention, la cathode est composite et comprend un support en un matériau conducteur de l'électricité, sous la zone active.

Dans cette forme de réalisation particulière de l'invention, le support est généralement choisi parmi les matériaux qui résistent à l'environnement électrochimique auquel la cathode est destinée.

Dans le cas particulier où celle-ci est destinée aux cellules d'électrolyse de solutions aqueuses de chlorure de métal alcalin, on choisit avantageusement un support en cobalt, en chrome, en fer, en nickel, en manganèse ou en un alliage de ces métaux. Des supports en fer ou en acier conviennent particulièrement bien.

L'épaisseur de l'oxyde métallique de la zone active sur le support doit être suffisante pour résister à l'usure par abrasion au contact de l'hydrogène gazeux et des électrolytes qui circulent à son contact pendant l'électrolyse. D'une manière générale, il est souhaitable que l'épaisseur de l'oxyde métallique de la zone active sur le support soit d'au moins 0,5 microns, de préférence d'au moins 5 microns. On obtient généralement d'excellents résultats avec des épaisseurs au moins égales à 10 microns, notamment avec des épaisseurs comprises entre 50 et 250 microns.

Pour fabriquer une cathode conforme à cette forme de réalisation préférée de l'invention, il suffit d'appliquer le composé thermodécomposable sur le support, puis de le chauffer en atmosphère contrôlée pour le décomposer et cristalliser l'oxyde métallique in situ sur le support. Il est souhaitable, à cet effet, d'appliquer le composé thermodécomposable à l'état liquide sur le support, de préférence à l'état d'une solution. A cet effet, on peut faire usage de toute technique d'enduction appropriée, telle qu'une immersion du support dans un bain du composé thermodécomposable, un badigeonnage du support avec ledit composé liquide ou une pulvérisation de ce dernier sur le support.

Selon une forme de réalisation préférée de l'invention, l'oxyde métallique est obtenu par décomposition thermique du composé thermodécomposable se trouvant en solution ou en suspension dans un bain contenant un sel soluble de métal alcalin.

Toutes autres choses étant égales, on a en effet observé que la présence d'un sel soluble de métal alcalin dans le bain contenant le composé thermodécomposable améliore les performances de la cathode selon l'invention, notamment en réduisant davantage sa surtension au dégagement d'hydrogène et en augmentant sa durée d'utilisation efficace.

Dans cette forme de réalisation préférée de l'invention, le choix du sel soluble de métal alcalin dépend de la nature du bain. En général, dans le cas de bains aqueux, on obtient de bons résultats avec des halogénures ou des nitrates de métal alcalin, le chlorure de sodium étant toutefois préféré.

La quantité minimum de sel soluble de métal alcalin à mettre en oeuvre dépend de la nature du sel, de la nature du bain et de la nature du composé thermodécomposable. Elle peut être déterminée dans chaque cas particulier par un travail de routine au laboratoire. En pratique, dans le cas où on utilise du chlorure de sodium dans un bain aqueux, on obtient de bons résultats avec des teneurs au moins égales à 0,2 mole par litre du bain, les teneurs supérieures à 0,5 mole par litre étant préférées.

La quantité maximum admissible de sel soluble de métal alcalin est égale à sa valeur de saturation du bain.

Le profil de la cathode selon l'invention n'est pas critique. Elle peut par exemple consister en une plaque plane, cintrée ou ondulée, éventuellement ajourée, ou en un fil rectiligne ou spiralé, ou encore en un treillis ajouré.

La cathode selon l'invention trouve une application particulièrement intéressante dans les cellules à diaphragme perméable et à membrane à perméabilité sélective pour l'électrolyse de saumures de chlorure de sodium, telles que celles décrites, à titre d'exemple, dans les brevets français 2 164 623 du 12 décembre 1972, 2 223 083 du 28 mars 1973, 2 230 411 du 27 mars 1974, 2 248 335 du 14 octobre 1974 et dans la demande de brevet français 77.11 370 du 12 avril 1977, tous au nom de la Demanderesse.

La cathode selon l'invention trouve également une application intéressante dans les cellules pour l'électrolyse de l'eau et dans les cellules pour la production d'hypochlorite ou de chlorate de métal alcalin, telles que celles décrites dans les brevets français 2 023 877 du 19 novembre 1969 et 2 147 063 du 17 juillet 1972, tous les deux au nom de la Demanderesse.

L'intérêt de l'invention va ressortir de la description des exemples d'application suivants, qui sont donnés exclusivement à titre illustratif.

Dans chacun des exemples qui vont suivre, on a procédé à l'électrolyse d'une saumure aqueuse contenant 255 g de chlorure de sodium par kg, dans une cellule de laboratoire à électrodes verticales, séparées par un diaphragme en amiante.

La cellule, de forme cylindrique, comprenait une anode formée d'une plaque circulaire en titane, percée de fentes verticales et revêtue d'un matériau actif de cristaux mixtes, constitués de 50 % en poids de bioxyde de ruthénium et 50 % en poids de bioxyde de titane.

La cathode a consisté en une structure métallique circulaire en treillis, dont la forme a été identique dans chaque exemple, mais dont la constitution a varié d'un exemple à l'autre.

La surface globale de chaque électrode de la cellule était égale à 113 cm$^2$, et la distance entre l'anode et la cathode a été fixée à 5 mm.

Le diaphragme a été appliqué sur la face de la cathode, orientée vers l'anode au départ d'une suspension d'amiante dans une saumure caustique, puis chauffé pendant 16 heures à 90°C, en appliquant la technique décrite dans la demande de brevet luxembourgeois 77.996 du 19 août 1977, au nom de la Demanderesse. Le grammage du diaphragme résultant était de 1,3 kg/m$^2$ de cathode.

Dans chaque exemple, on a procédé à l'électrolyse de la saumure précitée dans la cellule, à 85°C, sous une densité de courant de 2 kA par mètre carré d'anode, et on a réglé le débit de saumure introduite dans la chambre anodique, pour que la saumure caustique sortant de la chambre cathodique contienne environ 100 g d'hydroxyde de sodium et 140 g de chlorure de sodium par kg. On a mesuré périodiquement le potentiel de la cathode, au moyen de la méthode de mesure au capillaire de Luggin, relié à une électrode de référence au calomel saturé (ECS) (Modern Electrochemistry, Bockris and Reddy, Plenum Press, 1970, vol.2, p.890 et 891).

- 9 -

## Exemple 1

La cathode a consisté en un treillis en acier doux portant un revêtement actif d'hématite conforme à l'invention. Pour fabriquer la cathode, on a d'abord décapé le treillis au moyen d'acide chlorhydrique passivé au formol. On a ensuite pulvérisé à sa surface une solution aqueuse contenant, par litre, 200 g de ferritrioxalate d'ammonium de formule générale $(NH_4)_3 Fe(C_2O_4)_3 3H_2O$, puis on l'a chauffée pendant 15 minutes dans un four à 225°C, en présence d'air, pour décomposer le ferritrioxalate d'ammonium et cristalliser une première couche d'hématite sur le treillis.

Le traitement de pulvérisation avec la solution de ferritrioxalate d'ammonium et de chauffage en atmosphère oxydante a été répété dix fois, de manière à former au total dix couches superposées de cristaux d'hématite sur le treillis. Après formation de la dixième couche d'hématite, on a maintenu la cathode à 225°C pendant une heure, en présence d'air, puis on l'a laissée se refroidir au contact de l'air ambiant à environ 20°C.

La cathode ainsi obtenue, qui est conforme à l'invention, a été soumise à l'essai d'électrolyse décrit plus haut.

Les résultats de l'essai sont consignés au Tableau I ci-dessous.

### TABLEAU I

| Durée d'électrolyse (jours) | Potentiel cathodique (V) |
|---|---|
| 10 | -1,27 |
| 60 | -1,28 |
| 90 | -1,32 |

## Exemple 2

L'essai de l'exemple 1 a été répété en utilisant, pour former la zone active, un bain aqueux contenant, par litre, 214 g de ferritrioxalate d'ammonium et 29 g de chlorure de sodium.

Après décapage de la manière exposée à l'exemple 1, le treillis a été préchauffé à 250°C, puis enduit immédiatement d'une première couche du bain, par immersion dans celui-ci. Le treillis a ensuite été chauffé pendant 15 minutes dans un four à 250°C, en présence d'air, pour décomposer le ferritrioxalate d'ammonium et cristalliser une première couche d'hématite sur le treillis.

Le traitement d'immersion dans le bain et de chauffage à 250°C en atmosphère oxydante a été répété à dix reprises, de manière à appliquer sur le treillis dix couches superposées d'hématite. Après formation de la dixième couche, on a maintenu la cathode à 250°C pendant deux heures, en présence d'air, puis on l'a laissée se refroidir au contact de l'air ambiant à environ 20°C.

Les résultats de l'essai d'électrolyse avec la cathode ainsi obtenue sont mentionnés au Tableau II.

TABLEAU II

| Durée d'électrolyse (jours) | Potentiel cathodique (V) |
|---|---|
| 10 | -1,27 |
| 60 | -1,27 |
| 90 | -1,27 |
| 115 | -1,27 |

Exemple 3

On a préparé une cathode en appliquant le procédé décrit à l'exemple 2, mais en utilisant cette fois un bain contenant, par litre, 200 g de ferritrioxalate d'ammonium et 100 g de chlorure de sodium.

Après deux mois d'électrolyse suivant les conditions décrites plus haut, le potentiel cathodique de la cathode était égal à -1,26 V par rapport à l'électrode au calomel saturé.

Exemple 4

L'essai de l'exemple 1 a été répété une nouvelle fois en utilisant, pour le bain d'enduction, une solution de 120 g de nitrate ferrique par litre de 1-butanol.

Le treillis en acier doux, préalablement décapé comme décrit à l'exemple 1, a ensuite été chauffé à 250°C, puis immergé dans le bain d'enduction pour y former la couche de solution.

Le traitement thermique a été identique à celui de l'exemple 2, sauf que la durée du chauffage de chaque couche, dans le four à 250°C, a été de dix minutes. Par ailleurs, après formation de la dixième couche d'oxyde de fer sur la cathode, celle-ci a été chauffée pendant 16 heures à 350°C, puis refroidie au contact de l'air ambiant à environ 20°C.

A l'issue d'un mois d'électrolyse, dans les conditions d'essais décrites plus haut, la cathode a présenté un potentiel cathodique égal à -1,28 V par rapport à l'électrode au calomel saturé.

Exemple 5

Dans cet essai, on a appliqué sur le treillis en acier doux, une zone active formée d'oxyde de cobalt.

A cet effet, après décapage de la manière décrite à l'exemple 1, le treillis en acier doux a été immergé dans un bain aqueux contenant, par litre, 291 g de nitrate de cobalt hexahydraté, de formule générale $Co(NO_3)_2.6H_2O$, et 255 g de nitrate de sodium.

Le treillis imprégné d'une première couche du bain a ensuite été chauffé pendant 15 minutes dans un four à 250°C, en présence d'air, de manière à décomposer le nitrate de cobalt et à former une couche d'oxyde de cobalt.

Le traitement d'immersion et de chauffage à 250°C a été répété à cinq reprises, de manière à appliquer sur le treillis cinq couches superposées d'oxyde de cobalt. Après formation de la cinquième couche, la cathode a été maintenue à 250°C pendant une heure, puis refroidie au contact de l'air ambiant.

Le potentiel de la cathode, après 30 jours d'électrolyse dans les conditions décrites plus haut, était égal à -1,31 V par rapport à l'électrode au calomel saturé.

Exemple 6

A titre comparatif, on a utilisé une cathode antérieure à l'invention, constituée d'un treillis en acier doux, identique à celui des exemples 1 à 3, et qui a uniquement été décapé par traitement à l'acide chlorhydrique passivé au formol, puis monté tel quel dans la cellule d'essai d'électrolyse.

Dès le début de l'électrolyse, le potentiel de la cathode s'est élevé à -1,41 V par rapport à l'électrode au calomel saturé; après 70 jours d'essais, le potentiel de la cathode était égal à -1,45 V par rapport à l'électrode au calomel saturé.

Une comparaison des résultats d'électrolyse des exemples 1 à 3 (conformes à l'invention) avec ceux de l'exemple 4 (antérieur à l'invention) fait apparaître immédiatement le progrès apporté par l'invention en ce qui concerne la grandeur du potentiel cathodique et, par voie de conséquence, le rendement énergétique des cellules d'électrolyse.

- 13 -

<u>R E V E N D I C A T I O N S</u>

1 - Cathode pour la production électrolytique d'hydrogène, comprenant une zone active contenant un oxyde métallique obtenu par décomposition thermique d'un composé thermodécomposable, caractérisée en ce que la zone active est constituée essentiellement d'un oxyde métallique obtenu par décomposition thermique d'un composé thermodécomposable d'un métal choisi parmi le cobalt, le fer, le manganèse et le nickel.

2 - Cathode selon la revendication 1, caractérisée en ce que l'oxyde métallique est obtenu par décomposition thermique d'un composé thermodécomposable choisi parmi les nitrates, les sulfates, les phosphates et les sels d'acides carboxyliques.

3 - Cathode selon la revendication 1 ou 2, caractérisée en ce que l'oxyde métallique est obtenu par décomposition thermique du composé thermodécomposable en milieu oxydant.

4 - Cathode selon la revendication 3, caractérisée en ce que l'oxyde métallique est obtenu par décomposition thermique du composé thermodécomposable entre 100 et 300°C.

5 - Cathode selon l'une quelconque des revendications 1 à 4, caractérisée en ce que l'oxyde métallique est de l'hématite.

6 - Cathode selon l'une quelconque des revendications 1 à 5, caractérisée en ce que l'oxyde métallique est obtenu par décomposition thermique du composé thermodécomposable se trouvant en solution dans un bain contenant un sel soluble de métal alcalin.

7 - Cathode selon la revendication 6, caractérisée en ce que le sel soluble de métal alcalin est un halogénure de métal alcalin.

8 - Cathode selon la revendication 7, caractérisée en ce que le sel soluble de métal alcalin est du chlorure de sodium.

9 - Cathode selon l'une quelconque des revendications 6 à 8, caractérisée en ce que le bain contient, par litre, au moins 0,5 mole de sel soluble de métal alcalin.

10 - Cathode selon l'une quelconque des revendications 1 à 9, caractérisée en ce qu'elle comprend sous l'oxyde métallique un support en un matériau conducteur de l'électricité choisi parmi le cobalt, le chrome, le fer, le manganèse, le nickel et les alliages de ces métaux.

0023368

Office européen
des brevets

**RAPPORT DE RECHERCHE EUROPEENNE**

Numero de la demande

EP 80 20 0571

| Catégorie | Citation du document avec indication, en cas de besoin, des parties pertinentes | Revendication concernée | CLASSEMENT DE LA DEMANDE (Int Cl ³) |
|---|---|---|---|
| | **DOCUMENTS CONSIDERES COMME PERTINENTS** | | |
| D | US - A - 4 100 049 (J.R. BRANNAN)<br>* Colonne 5, lignes 35-50; colonne 6, lignes 1-25 * | 1-3,10 | C 25 B 11/06 |
| P,E | EP - A - 0 004 169 (D.E. BROWN)<br>* Page 4, lignes 27-33; page 5, lignes 22-30; page 7, exemple 2; pages 14,15; revendications * | 1,2,10 | |
| A | US - A - 3 992 278 (I. MALKIN) | | |
| A | US - A - 3 329 594 (P. ANTHONY) | | |

**DOMAINES TECHNIQUES RECHERCHES (Int. Cl. ³)**

C 25 B 11/06
11/04
11/10

**CATEGORIE DES DOCUMENTS CITES**

X particulièrement pertinent
A arrière-plan technologique
O divulgation non-écrite
P document intercalaire
T théorie ou principe à la base de l'invention
E demande faisant interférence
D document cité dans la demande
L document cité pour d'autres raisons
& membre de la même famille, document correspondant

Le présent rapport de recherche a été établi pour toutes les revendications

| Lieu de la recherche | Date d'achèvement de la recherche | Examinateur |
|---|---|---|
| La Haye | 10-10-1980 | GROSEILLER |

OEB Form 1503.1  06.78